# EUROPEAN PATENT APPLICATION

(11) **EP 2 284 778 A1**
(43) Date of publication of application: **16.02.2011**
(21) Application number: 10176052.8
(22) Date of filing: 29.08.2006
(51) Int. Cl.: G06Q 10/00, G06F 3/14, G06F 3/048

(54) **Method and device for presenting calendar views on small displays**

(62) Divisional of application: 06790594.3
(71) Applicant: Research in Motion Limited, Waterloo, Ontario N2L 3W8 (CA)
(72) Inventor: Scott, Sherryl Lee Lorraine, Toronto Ontario M5T 1Y9 (CA); Vymenets, Leon, Toronto Ontario M6K 3M9 (CA)
(74) Representative: Finnie, Peter John

(57) **Abstract**

A method is provided for presenting a calendar view to a user on a device having a limited display size. The method comprises the following steps: determining which time slots in a calendar application occur in the past; for each time slot determined to be in the past, determining whether the past time slot comprises a past event or free time; and, displaying current and future time slots together with past events, and no other past time slots, in the calendar view.

## Description

The present invention relates generally to a method for displaying information on a wireless communication device and specifically to the presentation of calendar views on such a device.

### BACKGROUND

Miniaturization within the computing industry has led to the success of portable computers. Laptop, or notebook, computers have become increasingly small in size and lightweight. However, even laptop computers have become too cumbersome for everyday portable computer access. Accordingly, portable digital assistants (PDAs) were introduced. PDAs provide computing functionality in a form factor sufficiently small that it is easy for a user to carry around.

Subsequent advancement of the wireless industry led to PDAs that provide wireless access to the telecommunication infrastructure. Accordingly, many of today's PDAs can facilitate both voice and data communication. The convergence of portable computing devices and telecommunication devices has led to a number of mobile devices that are available to consumers today. Such mobile devices include PDAs, paging devices, smart phones and the like.

However, the drive to portability and a reduced form factor have introduced a number of limitations on the mobile devices. For example, mobile devices generally have limited displays in order to provide a minimal size that affords portability.

In contrast, display sizes for use with desktop computers have increased to the point that it is not uncommon for a user to have a 17" display and many have displays that are even larger in size.

Accordingly, many application are designed for desktop use, with an abundance of space to visually represent actions or items to the user. For example, a calendar application can provide the user with a plurality of possible views, each having multiple frames for presenting different types of information. Such information is useful to the user for determining free time, scheduling meetings and appointments, and generally organizing their time.

However, on mobile devices, it is difficult to provide the user with a similar experience due to the limited screen size. Accordingly, there is a need for method of utilizing a mobile device to efficiently and effectively provide a user with relevant information in a limited area.

### SUMMARY

According to one aspect of the present invention, there is provided a device having a display with a limited display size, the device including a calendar application for managing time slots in a calendar, the device comprising a processor configured to:
determine which time slots occur in the past;
for each time slot determined to be in the past, determine whether the past time slot comprises a past event or free time; and,
display current and future time slots in addition to past events, and no other past time slots.

According to another aspect of the present invention, there is provided a method for generating a calendar view on a display of a device having a limited display size, comprising the steps of:
determining which time slots in a calendar application occur in the past;
for each time slot determined to be in the past, determining whether the past time slot comprises a past event or free time; and,
displaying current and future time slots together with past events, and no other past time slots, in the calendar view.

As previously described, mobile devices include any small form factor, portable device such as a smart phone, a personal digital assistant (PDA), such as a Blackberry^{™} by Research in Motion or a Treo^{™} by Palm for example, and the like. It is for such mobile devices that have a relatively small display that the invention will be of particular use.

### BRIEF DESCRIPTION OF THE DRAWINGS

An example of the invention will now be described by way of example only with reference to the following drawings in which:
**Figure 1** is a block diagram illustrating components of a wireless device;
**Figure 2a** is a screenshot of a sample Graphical User Interface (GUI) illustrating a calendar view;
**Figure 2b** is an alternate screenshot of the GUI illustrated in Figure 2a
**Figure 3** is a screenshot of a callout box for entering an event into the GUI shown in Figures 2a and b;
**Figure 4** is a screenshot of a dropdown list for entering a time for the event entered in Figure 3;
**Figures 5 and 6** are screenshots illustrating alternate ways of represent free time;
**Figure 7** is a flow chart describing processing of past time slots in accordance with the present invention;
**Figure 8** is a screen shot illustrating presentation of past time slots as processed in accordance with Figure 7; and
**Figures 9 and 10** are screenshots illustrating consolidated time slots.

### DETAILED DESCRIPTION

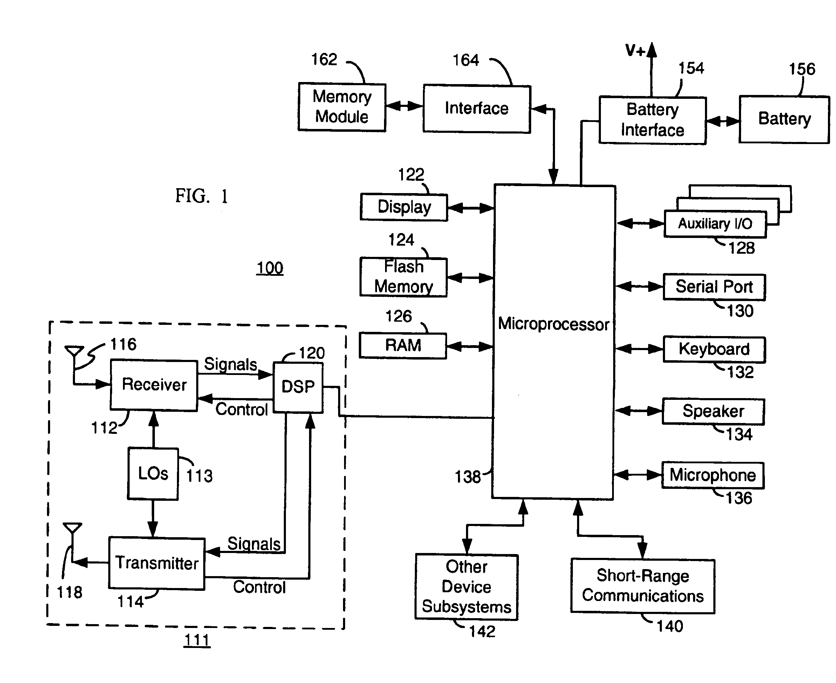

For convenience, like numerals in the description refer to like structures in the drawings. Referring to Figure 1, a mobile device is illustrated generally by numeral 100. The mobile device 100 is often a two-way communication device having both voice and data communication capabilities, including the capability to communicate with other computer systems. Depending on the functionality provided by the device mobile, it may be referred to as a data messaging device, a two-way pager, a cellular telephone with data messaging capabilities, a wireless Internet appliance, or a data communication device (with or without telephony capabilities).

The mobile device 100 includes a communication subsystem 111, which includes a receiver 112, a transmitter 114, and associated components, such as one or more embedded or internal antenna elements 116 and 118, local oscillators (LOs) 113, and a processing module such as a digital signal processor (DSP) 120. As will be apparent to those skilled in field of communications, the particular design of the communication subsystem 111 depends on the communication network in which mobile device 102 is intended to operate.

The mobile device 100 includes a microprocessor 138 which controls general operation of the mobile device 100. The microprocessor 138 also interacts with additional device subsystems such as a display 122, a flash memory 124, a random access memory (RAM) 126, auxiliary input/output (I/O) subsystems 128, a serial port 130, a keyboard 132, a speaker 134, a microphone 136, a short-range communications subsystem 140 such as Bluetooth^{™} for example, and any other device subsystems or peripheral devices generally designated at 142. Operating system software used by the microprocessor 138 is preferably stored in a persistent store such as the flash memory 124, which may alternatively be a read-only memory (ROM) or similar storage element (not shown). Those skilled in the art will appreciate that the operating system, specific device applications, or parts thereof, may be temporarily loaded into a volatile store such as RAM 126.

The microprocessor 138, in addition to its operating system functions, preferably enables execution of software applications on the mobile device 100. A predetermined set of applications which control basic device operations, typically including data and voice communication applications, is installed on the mobile device 100 during its manufacture. Additionally, applications may also be loaded onto the mobile device 100 through a network 104, an auxiliary I/O subsystem 128, serial port 130, short-range communications subsystem 140, or any other suitable subsystem 142, and installed by a user in RAM 126 or preferably a non-volatile store (not shown) for execution by the microprocessor 138. Such flexibility in application installation increases the functionality of the mobile device 100 and may provide enhanced on-device features, communication-related features, or both.

The display 122 is used to visually present an application's graphical user interface (GUI) to the user. The user can manipulate application data by modifying information on the GUI using an input device such as the keyboard 132 for example. Depending on the type of mobile device 100, the user may have access to other types of input devices, such as, for example, a scroll wheel, light pen or touch sensitive screen.

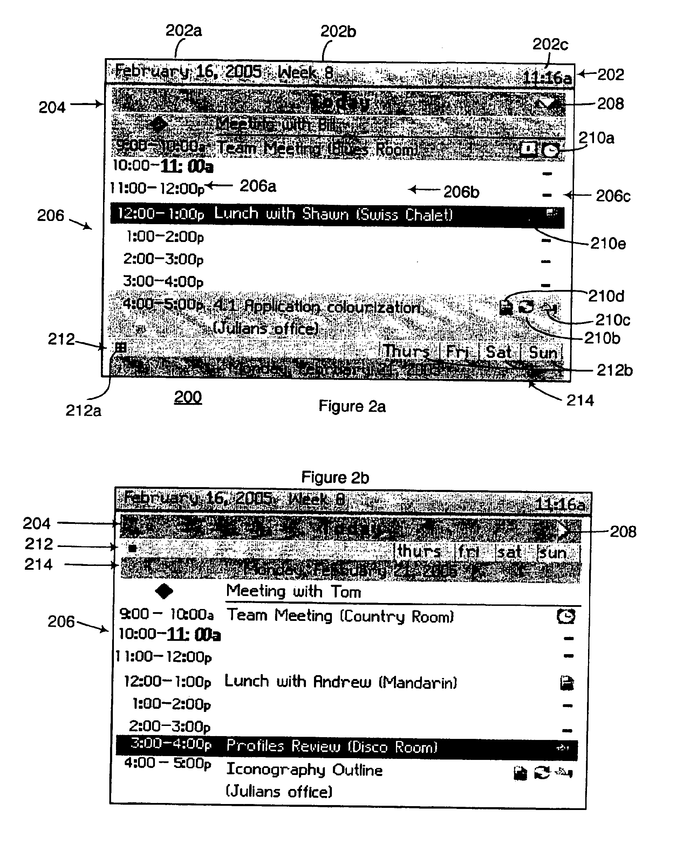

Referring to Figure 2a, a sample GUI as displayed on a mobile device is illustrated generally by numeral 200. In the present embodiment, the GUI 200 represents a calendar application in a "day view". A user navigates the GUI via the input device. In the day view, appointments of the day are listed in detail. A top line 202 in the GUI 200 includes a current date field 202a, week number filed 202b (of a possible 52-week year) and time field 202c for providing the user with the relevant information.

A single day separator bar 204 is located just below the top line 202. In the present embodiment, the single day separator bar 204 represents the current day of the year as presented in the current date field 202a. Accordingly, the single day separator bar 204a is labelled as "Today". For ease of explanation, the single day separator bar 204 will be referred to as the current day separator bar 204.

The current day separator bar 204 includes a plurality of sub-items presented as time slots 206. The time slots 206 may comprise free time or events, such as appointments for example. Accordingly, the current day separator bar 204 can be collapsed so that none of the day's time slots 206 are shown or expanded so that all of the day's time slots 206 are shown. The user can toggle between a collapsed and expanded state by clicking on the current day separator bar 204 using the input device.

In Figure 2a, the calendar view is shown with the current day separator bar 204 expanded so that the day's time slots 206 are visible to the user. In the present embodiment, a default view is to provide the user with an expanded view of the current day separator bar 204. However, it will be appreciated that the user and/or a system administrator, for example, can modify the default settings. For example, referring to Figure 2b, a calendar view is presented showing the current day separator collapsed.

Further, an icon 208 illustrates that the current day separator bar 204 is expanded and an absence of the same icon illustrates that the current day separator bar 204 is collapsed. It will also be appreciated that different icons may be used to illustrate that the current day separator bar is either collapsed or expanded.

With the current day separator bar 204 expanded, the user is provided with a list of the day's time slots 206. In the present example, the list starts at 9:00a.m. and ends at 5:00p.m. It will be appreciated that if an event is scheduled outside of these hours, the start or end time of the list is modified so that the event 206 is displayed.

Each of the time slots 206 comprises three columns. A first column 206a includes a time field for the event 206. In the present embodiment, the time filed 206a includes a start time and end time. A second column 206b includes a description field for the event. A third column 206c includes a plurality of icons 210 for providing the user with visual cues about the event. For example, an alarm clock icon 210a is displayed to indicate to the user that a reminder for the event 206 has been set. A recurring icon 210b is displayed to indicate to the user that the event 206 in one of a number of recurring meetings. Other sample icons include a hand 210c to illustrate a meeting, a page 210d to illustrate notes exist for the event, and a check mark 210e to illustrate a reminder. If no event is scheduled for a times slot, an icon, in the present example a hyphen, is used to provide the user with the visual cue that the time slot is available.

A multi-day separator bar 212 is located below the list of time slots 206 associated with the current day separator bar 204. The multi-day separator bar 212 is used to present the user with a compact display of multiple days having an attribute in common. Accordingly, the multi-day separator bar 212 comprises an attribute icon 212a and interactive text fields 212b. The common attribute is illustrated to the user via the attribute icon 212a. The days that share the common attribute are illustrated via the interactive text fields 212b. Thus it can be seen that a plurality of days can be presented to the user, while occupying minimal space on the display 122.

In the present embodiment, the common attribute shared amongst the days is an absence of events. That is, each of the days listed in the multi-day separator bar 212 has no scheduled events. Such days are referred to as free days. In the example shown in Figure 2, the free days include Thursday (Thurs), Friday (Fri), Saturday (Sat) and Sunday (Sun), which are listed in the interactive text fields 212b. The attribute icon 212a comprises an predefined icon that the user will recognize represents free days.

The interactive text fields 212b allow the user to select one of the free days and expand the list of time slots 206. Accordingly, although the list of time slots 206 is empty, this feature allows the user to quickly select a day in the near future in order to schedule an event. Thus, for example, if the user were to select one of the free days, a list of time slots 206 having no description 206b and a hyphen icon 206c is presented to the user. The user can select a time slot 206 and schedule an event, as will be detailed later in the description.

Below the multi-day separator bar 212 is a further single day separator bar 214. In the present embodiment, the further single day separator bar 214 represents a day in the future. For ease of explanation, the further single day separator bar 214 will be referred to as future day separator bar 214.

The future day separator bar 214 represents a next day that does not share the common attribute of the days listed in the multi-day separator bar 212. For example, in the present embodiment, the days in the multi-day separator bar 212 have no scheduled events. Accordingly, the next day that has a scheduled event is Monday, February 21, 2005, and is represented by the future day separator bar 214.

The future day separator bar 214 has similar functionality to the current day separator bar 204. In the present embodiment, the future day separator bar 212 is illustrated in a collapsed form. Like the current day separator bar 204, the user can toggle between a collapsed and expanded state by clicking on the future day separator bar 204 using an input mechanism. In a default setting, the future day separator bar 214 is presented to the user in its collapsed state. However, as will be appreciated, the default settings may be modified.

If the user chooses to expand the future day separator bar 214, it may be expanded a number of different ways. For example, other separator bars that are expanded may be automatically collapsed. Therefore, more space is available on the display 122 to present the time slots 206 associated with selected future day separator bar 214.

As another example, the state of the other separator bars are left in tact. However, the future day separator bar 214 is shifted in position so that it is the first separator bar listed below the top line 202. Therefore, the user can still view earlier separator bars by scrolling upwards, for example. Other display methods will become apparent to a person skilled in the art.

Although Figure 2 illustrates only a single multi-day separator bar 212 and only a single future day separator bar 214, it will be appreciated that more of these bars 212 and 214 can be shown if there is sufficient room on the display 122. For example, some devices may have larger displays 122 than others and would, therefore, be able to display more information. As another example, if both the current day separator bar 204 and the future day separator bar 214 are collapsed, there will be more room on the display 122 for additional information.

Thus, for example, if the Tuesday (February 22) and Wednesday (February 23) following the Monday (February 21) illustrated on the future day separator bar 214 are free days, then these days can be illustrated using a further multi-day separator bar. In the present embodiment, this further multi-day separator bar would be located below the future day separator bar. Likewise, if the Thursday (February 24) has scheduled events 206 it would be illustrated using a further future day separator bar.

Yet further, although the previous embodiments describe the common attribute shared amongst the days as an absence of events, a person skilled in the art will appreciate that other attributes in common may be illustrated on the display using a multi-day separator bar 212, as described above. For example, the common attribute may be that all the days listed in a multi-day separator bar have no scheduled events in the afternoon. This could be communicated to the user by presenting an icon to the user that is associated with free afternoons.

As another example, the common attribute may be that all the days listed in a multi-day separator bar have no scheduled events in the morning. This could be communicated to the user by presenting an icon to the user that is associated with free mornings.

Therefore, it will be appreciated that the user can be presented with a plurality of multi-day separator bars, each representing a different common attribute. The common attribute associated with each multi-day separator bar is communicated to the user via an associated representative icon.

Accordingly, it can be seen that the calendar view described with reference to Figure 2 provides the user with valuable information by efficiently using the limited space provided on the screen. Further, the embodiments use icons to efficiently communicate messages to the user.

Since the user is presented with a large volume of information using a limited display 122, additional visual cues may be provided to further improve the user's experience when viewing or scheduling events in the calendar.

For example, colour may be used to provide further information to the user. Specifically, events occurring in the past are represented in a first colour, free time is represented by a second colour, and upcoming appointments are represented by a third colour. This reduces the likelihood that the user may confuse different events.

For example, referring once again to Figure 2, it can be seen from the time field 202c that the time of the screenshot was 11:16a.m. Further, the first meeting of the day was from 9:00a.m. to 10:00a.m. Accordingly, the first meeting of the day had already occurred at the time the screenshot was taken. Accordingly, the first meeting is shaded grey. In contrast, free time is left as white and upcoming events are highlighted using yellow.

Further, in the present embodiment the end time of one of the most recently passed time slot 206 is highlighted to the user via a bold font. This feature provides a further visual cue to the user regarding the time of day in relation to the list of scheduled events.

In an alternate embodiment, when the calendar application is opened, the next scheduled event is presented as the second time slot 206 from the top. Therefore, the user is less likely to feel as if an appointment has been missed.

Yet further, the user can automatically be provided with the ability to enter a new event when the user navigates across an empty description field 206b. For example, if the user is navigating the calendar application using a scroll wheel, the description field 206b dynamically changes to a text entry field whenever the user scrolls over an empty description field 206b.

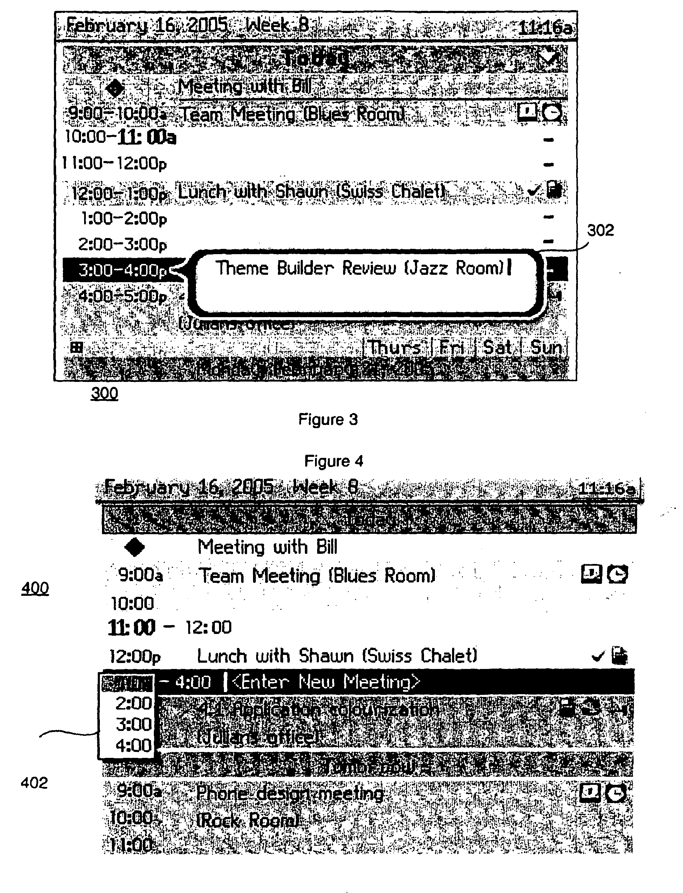

Referring to Figure 3, a further screenshot of the calendar application is illustrated generally by numeral 300. As shown by the screenshot, the concept of dynamic data entry is taken a step further and the user is dynamically provided with a callout box 302 when rolling over an empty description field 206b. The dynamic entry serves two primary purposes. A first primary purpose is to provide a visual cue to the user that there is no scheduled event for that time slot. A second primary purpose is to provide the user with a quick and easy way to enter new events. When the user rolls off the description field, the callout box 302 disappears. If the user has added an event, the event is displayed. Otherwise, the description field 206b remains empty.

Referring to Figure 4, yet a further screenshot of the calendar application is illustrated generally by numeral 400. The present screenshot 400 illustrates the ability of the user to set or modify the time of an event. In the present example, the user is presented with a drop down list 402 of available start times for the event, starting with the start time of the selected time slot 206. In this example, the drop down list increases by increments of one hour. However, it will be appreciated that other increment values may be used. The user navigates the drop down list 402 and selects a desired start time. Although not illustrated, a similar process is provided to determine the end time of the event. Further it will be appreciated that the user can enter a start and end time using the keyboard 122.

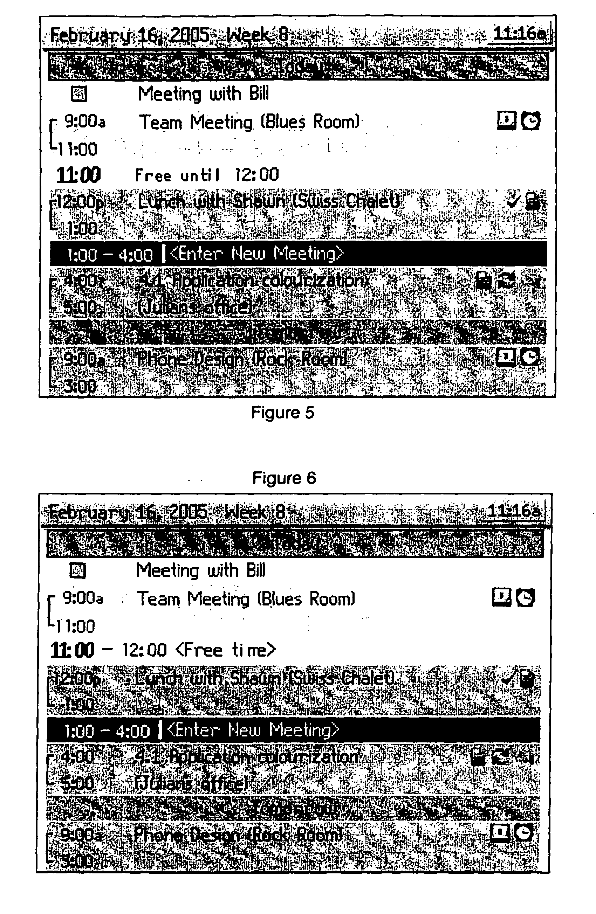

Referring to Figures 5 and 6, further screenshots of the calendar view are illustrated generally by numeral 500 and 600, respectively. As described with reference to the previous figures, free time can be displayed to the user in a number of different ways. For example, in Figures 2 and 3, free time is displayed by presenting the user with no text in the description field 206b and hyphens in the icon field 206c. In Figure 4, free time is displayed by presenting the user with no text in the description field 206b and no icon in the icon field 206c.

In Figure 5, the time field 206a presents the start time of a free time slot to the user. The description field 206b presents text to inform the user that the time slot is free. The description field 206b also includes text to inform the user of the end time of the free time slot.

In Figure 6, the time field 206a presents the start and end time of a free time slot to the user. However, for a free time slot, the time field 206a extends into a portion of the description field 206b. The description field 206b presents text to inform the user that the time slot is free.

Accordingly, it will be appreciated that Figures 5 and 6 demonstrate methods of differing the presentation of a time slot depending on whether the time slot includes an event or free time. Therefore, the user will easily be able to differentiate free time slots from occupied time slots. Further, although no icon is presented to the user in Figures 4, 5 and 6 to illustrate free time, it will be appreciated by a person of ordinary skill in the art that an icon, such as a hyphen for example, may be used.

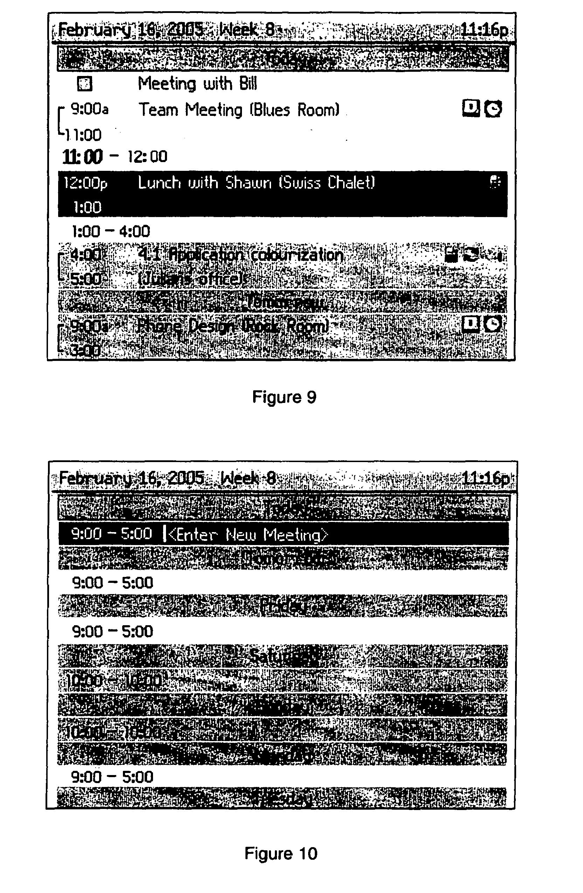

Referring to Figure 9, yet an alternate screenshot of a calendar view is shown. In the present screenshot, adjacent free time time-slots are consolidated into a single time slot 902. Therefore, rather than several time slots illustrating free time between 1:00 and 4:00, a single time slot is shown. This further reduces the amount of space required to display information to a user, which allows for greater time frame to be displayed to the user.

Referring to Figure 10, yet an alternate screenshot of a calendar view is shown. In the present embodiment, a plurality of free days are shown. This screen is displayed, for example, if the user chooses to expand the multi-day separator bar. In the present example, rather than display all the time slots for each day, a single time slot is shown for each day. The user can enter an event as previously described, by rolling over the desired time slot, entering the information and adjusting the start and end time of the event as required.

If an entered event is for less time than the time slot illustrates, the time slot is separated into as many times slots as are required to show the predefined time period. For example, if the user enters an event from 11:00 to 12:00, the single 9:00 to 5:00 time slot is broken into three time slots: a first time slot from 9:00 to 11:00 illustrating free time, a second time slot from 11:00 to 12:00 illustrating the event; and a third time slot from 12:00 to 5:00 illustrating free time.

Although Figures 9 and 10 illustrate adjacent free time slots being consolidated, it will be appreciated by a person skilled in the art that events spanning a plurality of adjacent time slots may also be consolidated into a single time slot.

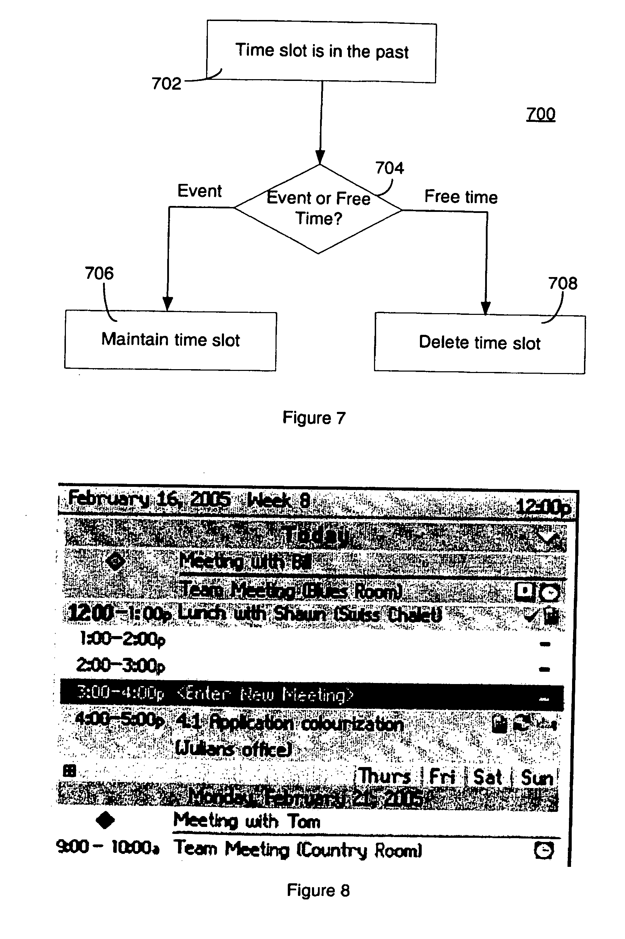

Referring to Figure 7, a flow chart showing management of past time slots 206 is illustrated generally by numeral 700. In step 702, it is determined whether or not a time slot 206 is in the past. At step 704, once it is determined that the time slot 206 is in the past, it is determined whether the time slot 206 comprised an event or free time.

At step 706, if the time slot 206 comprised an event, the event is maintained in the calendar. The event may be maintained, for a predefined period of time or until the user chooses to delete it. At step 708, if the time slot 206 comprised free time, the time slot is deleted from the calendar.

Referring to Figure 8, a screen shot illustrating a calendar view in which past free time slots are deleted is illustrated generally by numeral 800. It can be seen that the user is presented with only necessary information, such as events, when browsing through previous days' records. This provides an advantage on a device having a limited display size since the user is not presented with information that provides little added value. That is, the user generally does not need to know about past free time periods. However, the user often may need to access pass events.

## Claims

1. A device having a display with a limited display size, the device including a calendar application for managing time slots in a calendar, the device comprising a processor configured to:
a. determine which time slots occur in the past;
b. for each time slot determined to be in the past, determine whether the past time slot comprises a past event or free time; and,
c. display current and future time slots in addition to past events, and no other past time slots.

2. A device according to claim 1, the processor being configured to delete a past time slot from the calendar where the past time slot is free time.

3. A method for generating a calendar view on a display of a device having a limited display size, comprising the steps of:
a. determining which time slots in a calendar application occur in the past;
b. for each time slot determined to be in the past, determining whether the past time slot comprises a past event or free time; and,
c. displaying current and future time slots together with past events, and no other past time slots, in the calendar view.

4. A method according to claim 4, including the step of deleting a past time slot from the calendar where the past time slot is free time.

5. A computer readable medium comprising computer executable instructions for performing the method of claims 3 or 4.
